(19) Europäisches Patentamt
European Patent Office
Office européen des brevets

(11) **EP 4 501 522 A1**

(12) **EUROPEAN PATENT APPLICATION**
published in accordance with Art. 153(4) EPC

(43) Date of publication:
05.02.2025 Bulletin 2025/06

(51) International Patent Classification (IPC):
$B23K\ 26/064^{(2014.01)}$    $B23K\ 26/067^{(2006.01)}$
$B23K\ 26/082^{(2014.01)}$    $B23K\ 26/38^{(2014.01)}$

(21) Application number: 23780572.6

(22) Date of filing: 28.03.2023

(52) Cooperative Patent Classification (CPC):
B23K 26/064; B23K 26/067; B23K 26/082;
B23K 26/38; Y02E 60/10

(86) International application number:
PCT/JP2023/012611

(87) International publication number:
WO 2023/190563 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.03.2022 JP 2022058110

(71) Applicant: FURUKAWA ELECTRIC CO., LTD.
Tokyo 100-8322 (JP)

(72) Inventors:
• MATSUNAGA, Keigo
Tokyo 100-8322 (JP)
• NOGAMI, Yusuke
Tokyo 100-8322 (JP)
• KAYAHARA, Takashi
Tokyo 100-8322 (JP)

(74) Representative: SSM Sandmair
Patentanwälte Rechtsanwalt
Partnerschaft mbB
Joseph-Wild-Straße 20
81829 München (DE)

(54) **LASER CUTTING METHOD AND LASER CUTTING DEVICE**

(57) There is provided, for example, a laser cutting method for performing laser cutting on a metal foil by scanning, on a front surface of the metal foil with respect to the front surface, the front surface while irradiating the front surface with the laser light, in which the laser light includes a plurality of beams, and the plurality of beams are arranged to form a spot group including a plurality of spots separated in a relative scanning direction on the front surface. A scanning path of each of the beams on the front surface may include a plurality of zones in which scanning is performed in different scanning directions, and the plurality of beams may be arranged to form, as the spot group, a plurality of spot groups including a plurality of spots separated in scanning directions of the plurality of respective zones.

FIG.5

**Description**

Field

The present invention relates to a laser cutting method and a laser cutting apparatus.

Background

As one of techniques of cutting a workpiece made of a metal material, laser cutting by performing irradiation with laser light is known. The laser cutting is a method of irradiating a portion of a workpiece which is to be cut with laser light, melting the portion with energy of the laser light, and cutting the workpiece (see, for example, Non Patent Literature 1).

Citation List

Non Patent Literature

Non Patent Literature 1: Patwa, Rahul, et al. "High speed laser cutting of electrodes for advanced batteries." International Congress on Applications of Lasers & Electro Optics. 2010.

Summary

Technical Problem

In a case where a workpiece is a metal foil, it may be difficult to form a high-quality edge in cutting by performing irradiation once with laser light due to unevenness occurring at the edge or lumps remaining from local melting of the edge.
In addition, in a case where the metal foil is applied to an electrode of a battery, much higher-quality laser cutting is required.
Hence, one of objects of the present invention is to obtain both an improved novel laser cutting method and laser cutting apparatus capable of forming a higher-quality edge even in the case where the workpiece is a metal foil, for example.

Solution to Problem

A laser cutting method according to the present invention, for example, includes: performing laser cutting on a metal foil by scanning, on a front surface of the metal foil with respect to the front surface, the front surface while irradiating the front surface with laser light, wherein the laser light includes a plurality of beams, and the plurality of beams are arranged to form a spot group including a plurality of spots separated in a relative scanning direction on the front surface.
In the above-described laser cutting method, a power of an individual one of the beams forming the plurality of respective spots included in the spot group on the front surface may be set to a magnitude with which scanning with the individual one beam at a predetermined speed in the scanning direction does not enable the metal foil to be cut, and a power of the plurality of beams forming the plurality of spots included in the spot group on the front surface may be set to a magnitude with which scanning with the plurality of beams at the predetermined speed in the scanning direction enables the metal foil to be cut.
In the above-described laser cutting method, a scanning path of each of the beams on the front surface includes a plurality of zones in which scanning may be performed in different scanning directions, and the plurality of beams may be arranged to form, as the spot group, a plurality of spot groups including a plurality of spots separated in scanning directions of the plurality of respective zones.
In the above-described laser cutting method, the scanning path may include two zones in which scanning is performed in scanning directions orthogonal to each other.
In the above-described laser cutting method, the scanning path may include three or more zones in which the scanning is performed in scanning directions intersecting each other.
In the above-described laser cutting method, the plurality of spot groups may be arranged such that geometric centers of spots formed on the front surface substantially coincide with each other.
In the above-described laser cutting method, a distance from a geometric center of a plurality of spots formed on the front surface to a center of each of the spots may be 30 $\mu$m or longer and 75 $\mu$m or shorter.
In the above-described laser cutting method, the plurality of spots may include a first spot and a plurality of second spots provided around the first spot, and a ratio of a power of the first spot to a total power of the plurality of spots may be 50% or higher and 80% or lower.

In the above-described laser cutting method, the plurality of beams may be formed by a beam shaper.

In the above-described laser cutting method, the beam shaper may be a diffractive optical grating.

In the above-described laser cutting method, the metal foil may include a base metal and a covering layer covering at least one of a front surface and a back surface of the base metal.

In the above-described laser cutting method, the metal foil may include the base metal and two covering layers covering the front surface and the back surface of the base metal.

In the above-described laser cutting method, the scanning path of each of the beams on the front surface may include a zone passing through a first portion in which both the front surface and the back surface of the base metal are not covered with the covering layer, and a zone passing through a second portion in which at least one of the front surface and the back surface of the base metal is covered with the covering layer, and the first portion and the second portion may be consecutively cut.

In the above-described laser cutting method, irradiation conditions of the laser light may be same in both the zone passing through the first portion and the zone passing through the second portion, of the scanning path.

In the above-described laser cutting method, the base metal may be any one of an aluminum-based metal material, a copper-based metal material, and a nickel-based metal material.

In the above-described laser cutting method, the covering layer may be any one of lithiated transition metal oxides NCA ($LiNiCoAlO_2$) or NCM ($LiNiCoMnO_2$), carbon black, a polymer binder, $LiMn_2O_4$, $LiFePO_4$, $LiNiO_2$, $LiMnO_2$, $LiCoO_2$, and lithium sulfur ($Li_2S$).

A laser cutting apparatus according to the present invention, for example, includes: a laser oscillator; and an optical head configured to emit laser light output from the laser oscillator, wherein laser cutting is performed on a metal foil by scanning, on a front surface of the metal foil with respect to the front surface, the front surface while irradiating the front surface with the laser light, the laser light includes a plurality of beams, and the plurality of beams are arranged to form a spot group including a plurality of spots separated in a relative scanning direction on the front surface.

The above-described laser cutting apparatus may include a beam shaper configured to form the plurality of beams.

In the above-described laser cutting apparatus, the beam shaper may be a diffractive optical grating. Advantageous Effects of Invention

According to the present invention, both an improved novel laser cutting method and laser cutting device can be obtained.

Brief Description of Drawings

FIG. 1 is an exemplary schematic configuration diagram of a laser cutting apparatus of a first embodiment.

FIG. 2 is an illustrative view of a concept of a principle of a diffractive optical element included in the laser cutting apparatus of the embodiment.

FIG. 3 is an exemplary and schematic cross-sectional view of a metal foil coated with an active material as an example of a workpiece to be processed by the laser cutting apparatus of the embodiment.

FIG. 4 is an exemplary and schematic plan view of a metal foil coated with an active material as an example of the workpiece to be processed by the laser cutting apparatus of the embodiment, and is a view illustrating an example of a scanning path.

FIG. 5 is a schematic plan view illustrating an example of a pattern of spots formed on a front surface of a workpiece by laser light emitted from the laser cutting apparatus of the embodiment.

FIG. 6 is a schematic diagram illustrating an example of temporal change in output of a laser device included in the laser cutting apparatus of the embodiment.

FIG. 7 is an exemplary and schematic plan view of a metal foil coated with an active material as an example of a workpiece to be processed by the laser cutting apparatus of the embodiment, and is a view illustrating another example of the scanning path.

FIG. 8 is a schematic plan view illustrating an example of a pattern of spots formed on a front surface of a workpiece by laser light emitted from the laser cutting apparatus of the embodiment.

FIG. 9 is a schematic plan view illustrating an example of a pattern of spots formed on a front surface of a workpiece by laser light emitted from the laser cutting apparatus of the embodiment.

FIG. 10 is a schematic plan view illustrating an example of a pattern of spots formed on a front surface of a workpiece by laser light emitted from the laser cutting apparatus of the embodiment.

FIG. 11 is a schematic plan view illustrating an example of a pattern of spots formed on a front surface of a workpiece by laser light emitted from the laser cutting apparatus of the embodiment.

FIG. 12 is a schematic plan view illustrating an example of a pattern of spots formed on a front surface of a workpiece by laser light emitted from the laser cutting apparatus of the embodiment.
FIG. 13 is an exemplary schematic configuration diagram of a laser cutting apparatus of a second embodiment.

Description of Embodiments

Hereinafter, exemplary embodiments of the present invention will be disclosed. The configurations of the embodiments to be described below, and the operations and results (effects) provided by the configurations are examples. The present invention can also be realized by configurations other than those disclosed in the following embodiments. In addition, according to the present invention, it is possible to obtain at least one of various effects (including derivative effects) obtained by the configurations.

Embodiments to be described below have similar configurations. Hence, according to a configuration of each embodiment, a similar operation and effect based on the similar configuration can be obtained. In addition, in the following description, the same reference numerals are assigned to the same configurations, and redundant description thereof may be omitted.

In addition, in each drawing, an X direction is represented by an arrow X, a Y direction is represented by an arrow Y, and a Z direction is represented by an arrow Z. The X direction, the Y direction, and the Z direction intersect each other and are orthogonal to each other. The X direction and the Y direction are directions along a front surface Wa (processing surface) of a workpiece W, and the Z direction is a normal direction of the front surface Wa.

[First Embodiment]

[Configuration of Laser Cutting Apparatus]

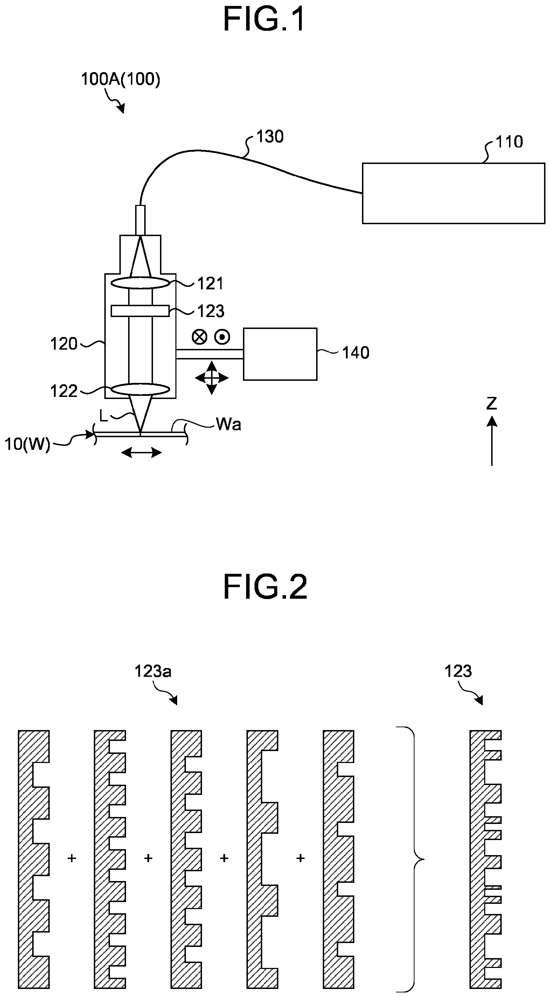

FIG. 1 is a schematic configuration diagram of a laser cutting apparatus 100A (100) of a first embodiment. The laser cutting apparatus 100 includes a laser device 110, an optical head 120, an optical fiber 130, and a moving mechanism 140.

The laser device 110 includes a laser oscillator as a light source and is configured to be able to output laser light having a power of several kilowatts, for example. A wavelength of the laser light output from the laser device 110 is, for example, 800 [nm] or longer and 1,200 [nm] or shorter, but is not limited thereto. In addition, the laser device 110 can intermittently output continuous-wave laser light at a frequency of 10 [MHz] or lower, for example.

The optical fiber 130 optically connects the laser device 110 and the optical head 120 and guides laser light output from the laser device 110 to the optical head 120. In a case where the laser device 110 outputs single-mode laser light, the optical fiber 130 is configured to transmit the single-mode laser light. In this case, the $M^2$ beam quality of the single-mode laser light is set to 1.2 or lower. In addition, in a case where the laser device 110 outputs multi-mode laser light, the optical fiber 130 is configured to transmit the multi-mode laser light.

The optical head 120 is an optical device for irradiating the front surface Wa of the workpiece W with the laser light input from the laser device 110. The optical head 120 includes a collimating lens 121, a condenser lens 122, and a diffractive optical element (DOE) 123. The collimating lens 121 and the condenser lens 122 may also be referred to as optical components. The optical head 120 may have optical components other than the collimating lens 121 and the condenser lens 122.

The collimating lens 121 collimates the input laser light. The collimated laser light becomes parallel light. The condenser lens 122 condenses laser light as parallel light and irradiates the workpiece W with the laser light as laser light L (output light).

The DOE 123 is disposed between the collimating lens 121 and the condenser lens 122. FIG. 2 is an illustrative view of a concept of a principle of the DOE 123. As illustrated in FIG. 2, the DOE 123 has, for example, a configuration in which a plurality of diffraction gratings 123a having different periods is overlapped. The DOE 123 bends or overlaps rays of the parallel light in a direction in which the parallel light is affected by the diffraction gratings 123a, thereby enabling the laser light to branch into a plurality of beams and enabling specifications such as the number of the plurality of beams, a relative arrangement, and shapes of the respective beams to be defined. The front surface Wa of the workpiece W is irradiated with the laser light L including the plurality of branched beams from the optical head 120, and thereby spots corresponding to the respective beams are formed on the front surface Wa. That is, the DOE 123 defines specifications such as the number of spots formed on the front surface Wa, a relative arrangement, shapes of the respective spots, and the like. In addition, by replacing the DOE 123 in the optical head 120, spots having various specifications can be formed on the front surface Wa. In addition, the optical head 120 may be configured to support the DOE 123 rotatably about an optical axis and be able to change a corresponding rotation angle. In this case, a pattern of the spots can be rotated on the front surface Wa.

The optical head 120 irradiates the front surface Wa of the workpiece W with the laser light L in a direction opposite to the Z direction. An irradiation direction of the laser light L from the optical head 120 is the direction opposite to the Z direction. For example, the optical head 120 can condense the laser light L such that a beam diameter is 10 [μm] or larger and 100 [μm] or smaller.

In addition, in the present embodiment, the optical head 120 is configured to be able to change a relative position with respect to the workpiece W since scanning is performed with the laser light L while the irradiation with the laser light L is performed on the front surface Wa of the workpiece W. The moving mechanism 140 can move the optical head 120 in a direction intersecting the Z direction, in other words, in a direction along the front surface Wa. In addition, the workpiece W may be transported in a direction intersecting the Z direction by a transport mechanism (not illustrated). The relative movement of the optical head 120 and the workpiece W with respect to each other, that is, the scanning with the laser light L on the front surface Wa, is realized by the movement of the optical head 120, the movement of the workpiece W, or the movement of both the optical head 120 and the workpiece W.

[Workpiece]

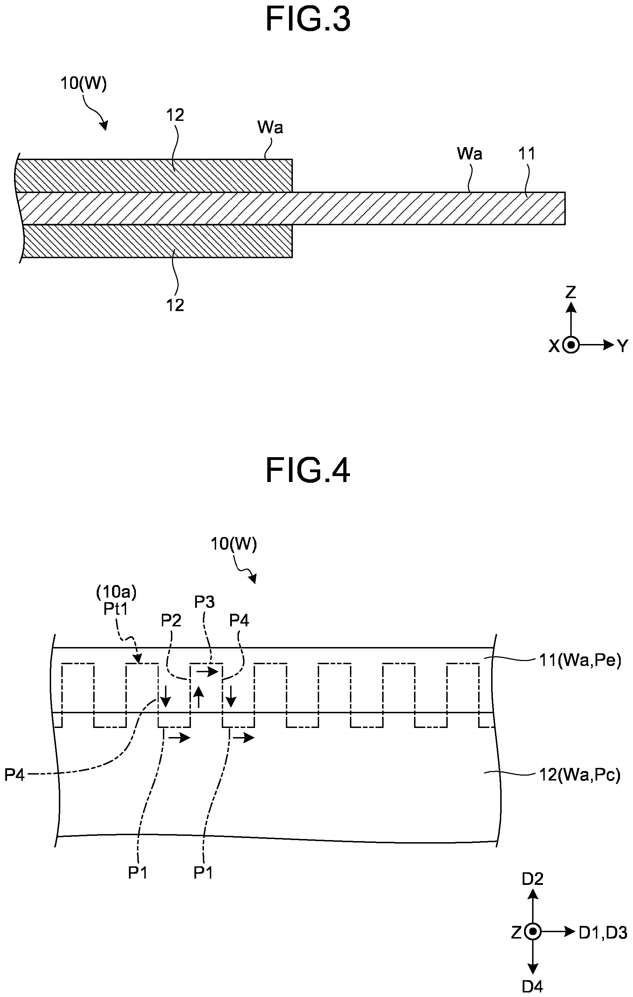

FIG. 3 is a cross-sectional view of a metal foil 10 as the workpiece W, and FIG. 4 is a plan view of the metal foil 10, the plan view including a scanning path Pt1 of a spot of laser light. Note that the scanning path Pt1 is a movement path of a geometric center of one or more spots. In addition, in the present embodiment, the workpiece W of the laser cutting apparatus 100 is the metal foil 10 which is applied to an electrode of a battery. A thickness of the metal foil 10 is, for example, 500 [μm] or less, but is not limited thereto.

As illustrated in FIG. 3, the metal foil 10 includes a base metal 11 and active material layers 12. The active material layers 12 are covering layers formed on both sides of the base metal 11 in a thickness direction, that is, both front and back surfaces of the base metal 11. The active material layer 12 may also be referred to as a coating film, a coating material, a surface layer, or a surface layer material. The metal foil 10 constitutes, for example, an electrode of a battery such as a lithium ion battery. In this case, the base metal 11 is made of, for example, any one of an aluminum-based metal material, a copper-based metal material, and a nickel-based metal material. In addition, the active material layer 12 is made of, for example, any one of lithiated transition metal oxides NCA ($LiNiCoAlO_2$) or NCM ($LiNiCoMnO_2$), carbon black, a polymer binder, $LiMn_2O_4$, $LiFePO_4$, $LiNiO_2$, $LiMnO_2$, $LiCoO_2$, and lithium sulfur ($Li_2S$). Note that the base metal 11 may be covered with an insulating layer as a covering layer different from the active material layer 12. In this case, the insulating layer may cover the base metal 11 at a position away from the active material layer 12. In addition, the covering layer such as the active material layer 12 may cover only one of the front surface and the back surface of the base metal 11. The base metal 11 is also referred to as a metal layer.

As illustrated in FIG. 4, on the front surface Wa of the metal foil 10 constituting a part of an electrode of a battery, a covered part Pc where the base metal 11 is covered with the active material layer 12, that is, the covering layer, and an exposed part Pe where the base metal 11 is exposed without being covered with the active material layer 12 are formed. The laser cutting apparatus 100 can continuously cut both the covered part Pc and the exposed part Pe by performing scanning with the laser light L along the predetermined scanning path Pt1 on the front surface Wa of the metal foil 10. A portion where the active material layer 12 is not formed on both the front surface that is an end surface of the base metal 11 in the Z direction and the back surface directing toward a direction opposite to the Z direction on a side opposite to the front surface is referred to as a first portion, and a portion where the active material layer 12 is formed on at least one of the front surface and the back surface of the base metal 11 is referred to as a second portion. The exposed part Pe is an example of the first portion, and the covered part Pc is an example of the second portion.

[Scanning Path (1)]

In the example of FIG. 4, the scanning path Pt1 has a rectangular wave shape as a whole and repeatedly includes a plurality of zones P1 to P4. The zone P1 is a zone in which the scanning of the front surface Wa is performed in a scanning direction D1 by a predetermined length from an end point of the zone P4. The zone P2 is a zone in which the scanning is performed in a scanning direction D2 by a predetermined length from an end point of the zone P1. The zone P3 is a zone in which the scanning is performed in a scanning direction D3 by a predetermined length from an end point of the zone P2. The zone P4 is a zone in which the scanning is performed in a scanning direction D4 by a predetermined length from an end point of the zone P3.

As illustrated in FIG. 4, the scanning direction D2 intersects and is orthogonal to the scanning direction D1, the scanning direction D3 intersects and is orthogonal to the scanning direction D2, the scanning direction D4 intersects and is orthogonal to the scanning direction D3, and the scanning direction D1 intersects and is orthogonal to the scanning direction D4. The scanning direction D1 and the scanning direction D3 are parallel to each other, and the scanning direction D2 and the scanning direction D4 are antiparallel to each other. That is, in the present embodiment, the scanning path Pt1 includes two zones (P1, P2, and the like) in which the scanning is performed in the scanning directions (D1, D2, and the like) orthogonal to each other and includes a plurality of zones P1 (P3), P2, and P4 in which the scanning is performed in the scanning directions D1 (D3), D2, and D4 different from each other. Note that the scanning directions D1 and D3 are examples of a longitudinal direction of an edge 10a extending long along the scanning path Pt1, and the scanning directions D2 and D4 are examples of a transverse direction (width direction) of the edge 10a.

Note that the scanning directions D1 to D4 are scanning directions with respect to the front surface Wa. Therefore, in a case where the workpiece W moves with respect to the laser cutting apparatus 100 by a velocity vector Vw, a velocity vector Vl of the laser light L with respect to the laser cutting apparatus 100 in the individual zones P1 to P4 is a sum of velocity vectors Vr in the scanning directions D1 to D4 of the laser light L with respect to the front surface Wa in the individual zones P1 to P4 and the velocity vector Vw. In addition, in a case where the workpiece W is stopped with respect to the laser cutting apparatus 100, that is, in a case where the velocity vector Vw is 0, the velocity vector Vl of the laser light L with respect to the laser cutting apparatus 100 in the individual zones P1 to P4 is the same as the velocity vectors Vr in the scanning directions D1 to D4 of the laser light L with respect to the front surface Wa in the individual zones P1 to P4.

In addition, before the irradiation with the laser light L is performed depending on the scanning along the scanning path Pt1 illustrated in FIG. 4, the workpiece W is set in a support device (not illustrated) that supports the workpiece W in a stopped state or a transport device (not illustrated) that movably (transportably) supports the workpiece W so that the workpiece W can be irradiated with the laser light L while being scanned.

[Spot Pattern (1)]

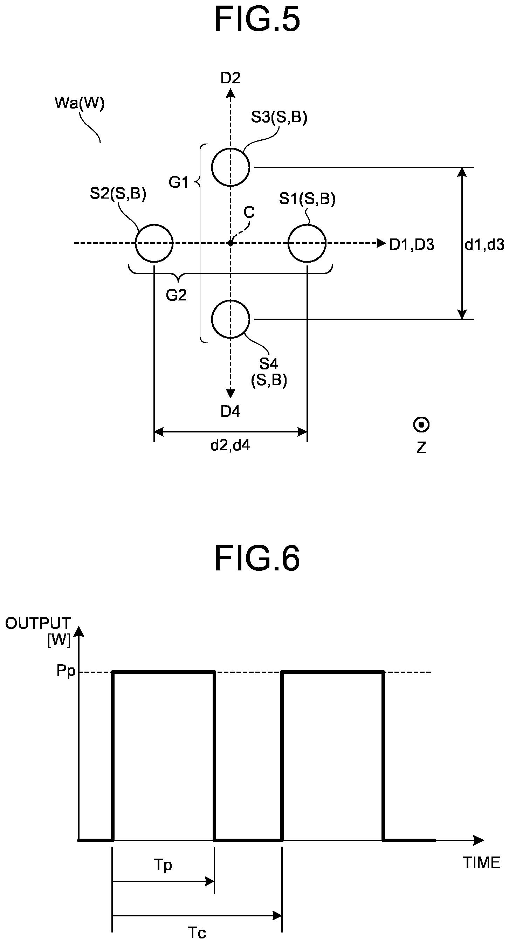

FIG. 5 is a plan view illustrating an example of a pattern of a plurality of spots S applied to a case where the scanning is performed with the laser light L along the scanning path Pt1 of FIG. 4 to cut the workpiece W. FIG. 5 illustrates a shape and arrangement at a moment when the front surface Wa is irradiated with the plurality of beams B of the laser light L and the plurality of spots S is formed.

In the example of FIG. 5, the laser light L includes four beams B, and four spots S (S1 to S4) are formed by respective beams B. These four spots S include two spots S1 and S2 separated from each other in the scanning directions D1 and D3 and two spots S3 and S4 separated from each other in the scanning directions D2 and D4. Here, the spots S1 and S2 are referred to as a spot group G1, and the spots S3 and S4 are referred to as a spot group G2.

In a case where the scanning is performed with the laser light L including these beams B in the scanning direction D1 in the zone P1 on the front surface Wa, the two spots S (S1 and S2) separated from each other in the scanning direction D1 are irradiated at a time interval at respective positions in the zone P1. Specifically, at the respective positions, first, the spot S1 is irradiated, and then the spot S2 is irradiated.

In a case where the scanning is performed with the laser light L including these beams B in the scanning direction D2 in the zone P2 on the front surface Wa, the two spots S (S3 and S4) separated from each other in the scanning direction D2 are irradiated at a time interval at respective positions in the zone P2. Specifically, at the respective positions, first, the spot S3 is irradiated, and then the spot S4 is irradiated.

In a case where the scanning is performed with the laser light L including these beams B in the scanning direction D3 in the zone P3 on the front surface Wa, the two spots S (S1 and S2) separated from each other in the scanning direction D3 are irradiated at a time interval at respective positions in the zone P3. Specifically, at the respective positions, first, the spot S1 is irradiated, and then the spot S2 is irradiated.

In addition, in a case where the scanning is performed with the laser light L including these beams B in the scanning direction D4 in the zone P4 on the front surface Wa, the two spots S (S3 and S4) separated from each other in the scanning direction D4 are irradiated at a time interval at respective positions in the zone P4. Specifically, at the respective positions, first, the spot S4 is irradiated, and then the spot S3 is irradiated.

As illustrated in FIG. 4, the scanning path Pt1 includes the plurality of zones P1 (P3), P2, and P4 in which the scanning is performed in different scanning directions D1 (D3), D2, and D4, respectively. As illustrated in FIG. 5, the plurality of beams B of the laser light L forms a plurality of spot groups G1 and G2 including the plurality of (two) spots S separated in the scanning directions D1 (D3), D2, and D4 of the plurality of zones P1 (P3), P2, and P4, respectively, on the front surface Wa. When the laser light L is emitted while the scanning is performed along the relative scanning path Pt1 illustrated in FIG. 4, two spots S pass through respective positions on the scanning path Pt1 at a time interval, in other words, the respective positions on the scanning path Pt1 are irradiated with the beams B twice at a time interval.

In addition, a power of the beam B forming each of the plurality of spots S included in the spot groups G1 and G2 on the front surface Wa is set to a magnitude with which scanning with the individual one beam B at a predetermined speed in the scanning direction does not enable the workpiece W to be cut. That is, in the example of FIG. 5, a power of the beam B forming each of the plurality of spots S1 and S2 included in the spot group G1 is set to a magnitude with which scanning with the individual one beam B at a predetermined speed V1 in the scanning directions D1 and D3 does not enable the workpiece W to be cut. On the other hand, a power of the beam B forming each of the plurality of spots S3 and S4 included in the spot group G2 is set to a magnitude with which scanning with the individual one beam B at a predetermined speed V2 in the scanning directions D2 and D4 does not enable the workpiece W to be cut. Here, the predetermined speeds V1 and V2 are scanning speeds with the relative laser light L (the beams B, the spots S) with respect to the front surface Wa in the respective zones P1 to P4.

Further, a power of the plurality of beams B forming the plurality of spots S included in the spot groups G1 and G2 on the front surface Wa is set to a magnitude with which scanning with the plurality of beams B at the predetermined speed in the scanning direction enables the workpiece W to be cut. That is, in the example of FIG. 5, a power of the plurality of beams B forming the plurality of spots S1 and S2 included in the spot group G1 is set to a magnitude with which scanning with the plurality of beams B at the predetermined speed V1 in the scanning directions D1 and D2 enables the workpiece W to be cut. On the other hand, a power of the plurality of beams B forming the plurality of spots S3 and S4 included in the spot group G2 is set to a magnitude with which scanning with the plurality of beams B at the predetermined speed V2 in the scanning directions D3 and D4 enables the workpiece W to be cut.

According to this embodiment, as compared with the case where each position on the scanning path Pt1 is cut by performing irradiation once with one beam B, the power of the beam B per irradiation, that is, the amount of energy supplied per unit time to each position by performing irradiation once, can be set to be smaller. As a result, for example, since an excessive temperature rise at each position can be curbed, it is possible to curb occurrence of an inconvenient event such as generation of unevenness in the metal foil 10 or local generation of lumps, and to form the higher-quality edge 10a. In addition, as in the present embodiment, in a case where the workpiece W is the metal foil 10 constituting a part of an electrode of a battery, it is possible to obtain an advantage in that it is possible to curb the alteration or the disappearance of the active material layer 12 due to the energy supplied from the laser light L.

In addition, as illustrated in FIG. 5, a position of the center of gravity C (geometric center) of the spots S1 and S2 included in the spot group G1 substantially coincides with a position of the center of gravity C of the spots S3 and S4 included in the spot group G2. With such a setting, it is possible to reduce a movement amount of a cutting position when the scanning direction is switched as compared with the case where the positions of the centers of gravity between the spot groups are separated from each other.

Widths d1 to d4 (see FIG. 5) of all of the spots in a state in which the scanning is performed in the scanning directions D1 to D4 are defined as distances between centers of the spots S positioned at both ends in directions orthogonal to the scanning directions D1 to D4. That is, the widths d1 and d3 of all of the spots in the state in which the scanning is performed in the scanning directions D1 and D3 are distances between centers of the spots S3 and S4 positioned at both ends in the directions (in the example of FIG. 5, the scanning directions D2 and D4) orthogonal to the scanning directions D1 and D3. In addition, the widths d2 and d4 of the entire spot in the state of being scanned in the scanning directions D2 and D4 are distances between the centers of the spots S1 and S2 located at both ends in the directions (In the example of FIG. 5, the scanning directions D1 and D3) orthogonal to the scanning directions D2 and D4. In addition, a diameter of each of the spots S (S1 to S4) is defined as a length of a region where the intensity is $1/e^2$ or higher of the peak intensity. From the viewpoint of more reliable cutting of the metal foil 10 and reduction in thermal effect on the metal foil 10 or the active material layer 12, the irradiation energy E [J/mm] is energy of irradiation per unit length of the front surface Wa, and can be expressed by the following Expression (1) by the experimental research of the inventors.

$$E = Pp \times Dr/(100 \times v) \tag{1}$$

Here, Pp represents a peak output [W], Dr represents a duty ratio [%], and v represents a scanning speed [mm/s]. Note that a state in which a frequency of a pulse is 0 indicates a state in which the laser beam is emitted continuously instead of intermittently.

In addition, in a laser cutting method for the metal foil of the present embodiment, an overlap ratio R between an irradiation region of a pulse and an irradiation region of the next pulse can be expressed by the following Expression (2).

$$R = L2/L1 \tag{2}$$

Here, L1 represents a length of the irradiation region in a scanning direction, and L2 represents a length of an overlapping region of the pulse and the next pulse in a scanning direction in a case where the pulse and the next pulse overlap in the scanning direction. The length of the overlapping region in the scanning direction is defined as 0 in a case where the pulse and the next pulse are in contact in the scanning direction, and -I in a case where the pulse and the next pulse are separated from each other by a distance I (> 0) in the scanning direction. According to the experimental study of the inventors, it has been found that the irradiation energy E is preferably 0.05 [J/mm] or more and 0.4 [J/mm] or less, and the overlap ratio R is preferably -100 [%] or higher and 50 [%] or lower.

In addition, it has been found that the width of the spots S is more preferably 14 [μm] or larger and 30 [μm] or smaller. In addition, it has been found that the widths d1 to d4 of the spots S are preferably 60 [μm] or larger and 150 [μm] or smaller. In addition, it has been found that a distance between the centers of gravity C of the plurality of spots S and a center of a surrounding spot S is preferably 30 [μm] or larger and 75 [μm] or smaller. It has been found that, in a case where the distance is larger than 75 [μm], the thermal effect on a region around a cutting position increases, the desired quality cannot be satisfied, and it is difficult to cut the workpiece W. On the other hand, in a case where the distance was 75 [μm] or

smaller, it was possible to decrease the thermal effect on the surrounding region, and it was possible to efficiently perform the cutting. This is presumed to be because, by setting the distance to 75 [μm] or smaller, heat applied to the workpiece W at the plurality of separated spots S is appropriately superimposed near the center of gravity C. In addition, in a case where the distance is smaller than 30 [μm], it is not possible to obtain the effect of setting the plurality of spots separated in the scanning direction.

[Sporadic Irradiation]

Further, the inventors have observed that, in such laser cutting of the metal foil 10, by intermittently (sporadically) irradiating the front surface Wa with the laser light L at a predetermined frequency, higher-quality processing can be performed in a shorter processing time. From such a viewpoint, the inventors have experimentally found that the frequency of the pulse of the laser light L is preferably 10 [MHz] or lower.

FIG. 6 is a graph illustrating a schematic temporal change of a pulse of laser light output from the laser device 110. In FIG. 6, the horizontal axis represents time, and the vertical axis represents an output of the laser light from the laser device 110. Pp represents a peak power (high power). In the sporadic irradiation, when an oscillation time in each pulse is represented by Tp and a period of a pulse is represented by Tc, a duty ratio Dr can be expressed as $Dr = (Tp/Tc) \times 100$ [%]. In addition, the frequency of the pulse is $1/Tc$.

[Scanning Path (2)]

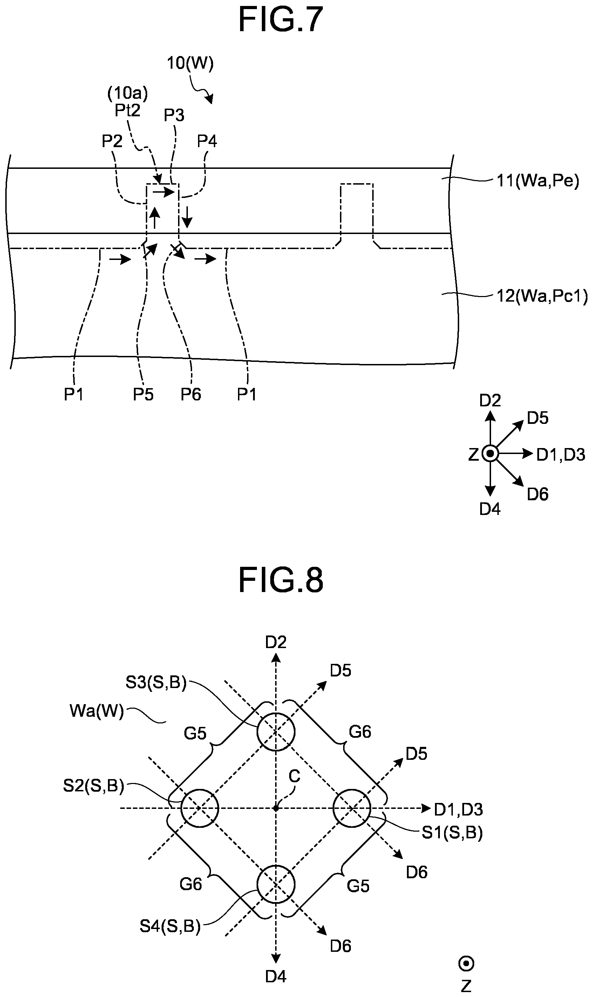

FIG. 7 is a plan view of the metal foil 10, the plan view including a scanning path Pt2 of a spot of laser light. As can be known by comparing FIG. 7 with FIG. 4, in the present embodiment, a zone P5 in which the scanning is performed in a scanning direction D5 is interposed between the zone P1 and the zone P2, and a zone P6 in which the scanning is performed in the scanning direction D6 is interposed between the zone P4 and the zone P1. The scanning direction D5 is a direction between the scanning direction D1 (D3) and the scanning direction D2, and the scanning direction D6 is a direction between the scanning direction D1 (D3) and the scanning direction D4. The scanning path Pt2 is the same as the scanning path Pt1 except that the zones P5 and P6 are interposed and the length of the zone P1 is different. The scanning path Pt2 includes four zones (P1 (P3), P5, P2, P6, and the like) in which the scanning is performed in the scanning directions (D1 (D3), D5, D2, D6, and the like) intersecting each other. Note that an absolute value (minimum value) of an angle difference between the scanning direction D1 and the scanning directions D5 and D6 is, for example, 45°, but is not limited thereto. In addition, the scanning directions intersecting each other do not include scanning directions parallel to each other or scanning directions antiparallel to each other (opposite directions). In addition, the scanning path may include three or five or more zones in which the scanning is performed in scanning directions orthogonal to each other.

FIG. 8 is a plan view illustrating an example of a pattern of a plurality of spots S applied to a case where the scanning is performed with the laser light L along the scanning path Pt2 of FIG. 7 to cut the workpiece W. FIG. 8 also illustrates a shape and arrangement at a moment when the front surface Wa is irradiated with the plurality of beams B of the laser light L and the plurality of spots S is formed.

As is clear from comparison between FIG. 8 and FIG. 5, the arrangement of the spots S in FIG. 8 is the same as the arrangement of the spots S in FIG. 5. That is, the plurality of spots S includes the spot groups G1 and G2 (not illustrated in FIG. 8) illustrated in FIG. 5. Further, as illustrated in FIG. 8, the plurality of spots S includes a spot group G5 including two spots S separated in a scanning direction D5 of a zone P5, and a spot group G6 including two spots S separated in a scanning direction D6 of a zone P6.

The spot S3 and the spot S2 constitute the spot group G5, and the spot S1 and the spot S4 constitute the spot group G5. In a case where the scanning is performed with the laser light L including the beams B forming the spots S in the scanning direction D5 in the zone P5 on the front surface Wa, the two spots S (S3 and S2, and S1 and S4) separated from each other in the scanning direction D5 are irradiated at time intervals at respective positions in the zone P5.

In addition, the spot S1 and the spot S3 constitute the spot group G6, and the spot S4 and the spot S2 constitute the spot group G6. In a case where the scanning is performed with the laser light L including the beams B forming those spots S in the scanning direction D6 in the zone P6 on the front surface Wa, the two spots S (S1 and S3, and S4 and S2) separated from each other in the scanning direction D6 are irradiated at time intervals at respective positions in the zone P6.

Therefore, even in a case where the pattern of FIG. 8 (FIG. 5) is applied to the scanning path Pt2 of FIG. 7, two spots S separated from each other in the scanning directions D1 to D6 are irradiated at time intervals in all of the zones of the scanning path Pt2 including the zones P5 and P6. Also in this case, the power of the beams B is set such that the workpiece W cannot be cut by the scanning with the individual one beam B, and the workpiece W can be cut by the scanning with the plurality of beams B forming the spot groups G1 to G6. Also in this case, for example, since an excessive temperature rise at each position can be curbed, it is possible to curb occurrence of an inconvenient event such as generation of unevenness in the metal foil 10 or local generation of lumps, and to form the higher-quality edge 10a.

In addition, since four beams B of the laser light L form the four spots S separated from each other on the front surface Wa in the pattern of FIG. 8 (FIG. 5), as compared with a case where the number of beams B (the spots S) is small, it is possible to form more spot groups G1 to G6 as a combination of two spots S separated in different directions, and it is possible to obtain an advantage in that easy application is performed to more scanning directions D1 to D6. The larger the number of beams B, that is, the number of spots S separated from each other, the easier the application to more scanning directions. In addition, the pattern of FIG. 8 (FIG. 5) can be applied to, for example, a scanning path including a predetermined zone in a predetermined scanning direction at an angle of 45° as an absolute value (minimum value) of an angle difference with respect to the predetermined zone, and a zone in a scanning direction at an angle of 90° as an absolute value (minimum value) of an angle difference with respect to the predetermined zone. That is, the pattern of FIG. 8 (FIG. 5) is easily applied to the typical shape of the edge 10a.

[Spot Pattern (2)]

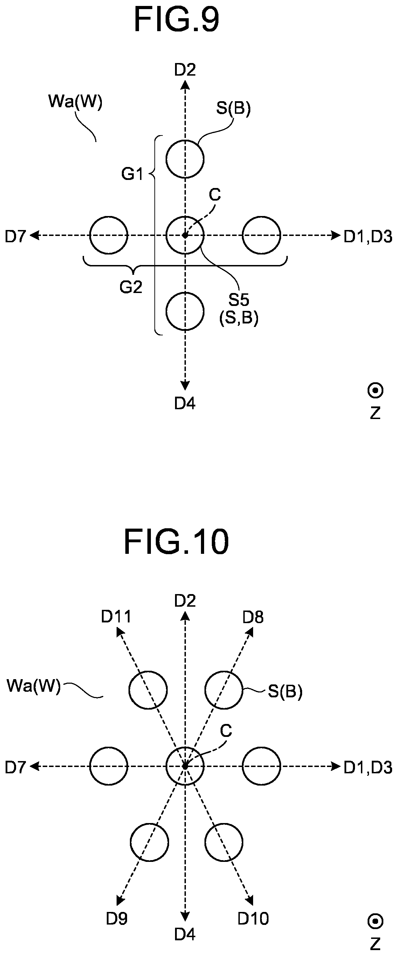

FIG. 9 is a plan view illustrating an example of a pattern of a plurality of spots S applied to a case where the scanning is performed with the laser light L along the scanning path Pt1 of FIG. 4 to cut the workpiece W, the example being different from that of FIG. 5 (FIG. 8). FIG. 9 also illustrates a shape and arrangement at a moment when the front surface Wa is irradiated with the plurality of beams B of the laser light L and the plurality of spots S is formed.

As is clear from comparison between FIG. 9 and FIG. 5, in the pattern of FIG. 9, a spot S5 positioned at the center of the plurality of spots S is added to the pattern of FIG. 5. In this case, the number of spots S increases from two to three in both the spot groups G1 and G2. Also in this case, the power of the beams B is set such that the workpiece W cannot be cut by the scanning with the individual one beam B, and the workpiece W can be cut by the scanning with the plurality of beams B forming the spot groups G1 and G2. Hence, in the pattern of FIG. 9, since energy can be divided for a larger number of spots S (beams B) to be supplied to respective positions on the front surface Wa, the power of the beam B per irradiation of each position, that is, the amount of energy supplied per unit time to each position by performing irradiation once, can be set to be much smaller. Therefore, according to the pattern of FIG. 9, for example, since an excessive temperature rise at each position can be further curbed, it is possible to further curb occurrence of an inconvenient event such as generation of unevenness in the metal foil 10 or local generation of lumps, and to form the much higher-quality edge 10a.

Also in the example of FIG. 9, a position of the center of gravity C (geometric center) of the spots S included in the spot group G1 substantially coincides with a position of the center of gravity C of the spots S included in the spot group G2. Hence, also in the example of FIG. 9, it is possible to reduce the movement amount of the cutting position when the scanning direction is switched. Note that, in the example of FIG. 9, the spot S5 overlapping the center of gravity C is formed.

[Spot Pattern (3)]

FIG. 10 is a plan view illustrating another example of the pattern of the plurality of spots S which is different from those of FIGS. 5, 8, and 9. FIG. 10 also illustrates a shape and arrangement at a moment when the front surface Wa is irradiated with the plurality of beams B of the laser light L and the plurality of spots S is formed.

In the pattern of FIG. 10, the number of spots S is larger than that in FIGS. 5, 8, and 9, and accordingly, the pattern can be applied to a scanning path including zones in which scanning is performed in more scanning directions D1 to D4 and D7 to D11. Hence, the pattern of FIG. 10 can be applied to a shape of the edge 10a which is more complicated or denser. In addition, since each of the plurality of spot groups includes three spots S, the same effect as that of the pattern of FIG. 9 can be obtained. Note that an absolute value (minimum value) of an angle difference between the scanning direction D1 and the scanning directions D8 and D11 is, for example, 60°, but is not limited thereto.

[Spot Pattern (4)]

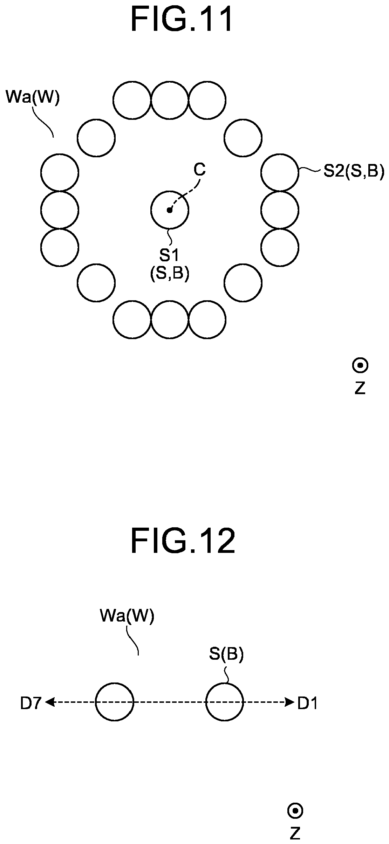

FIG. 11 is a plan view illustrating another example of the pattern of the plurality of spots S different from those of FIGS. 5 and 8 to 10. FIG. 11 also illustrates a shape and arrangement at a moment when the front surface Wa is irradiated with the plurality of beams B of the laser light L and the plurality of spots S is formed.

In the pattern of FIG. 11, a spot S1 (S) positioned at a substantially center and a plurality of spots S2 disposed side by side in a circumferential shape (annular shape) to surround the spot S1 are arranged on the front surface Wa. In this case, since the plurality of spots S has a larger number of spots S than those in FIGS. 5 and 8 to 10 and has spot groups disposed side by side in various radial directions passing through the center of gravity C, the present invention can be applied to a scanning path having zones in various scanning directions. That is, the pattern of FIG. 11 can be applied to a shape of the edge 10a which is much more complicated or denser. In addition, since each of the plurality of spot groups includes three spots S, the same effects as those of the patterns of FIGS. 9 and 10 can be obtained.

In addition, through intensive research by the inventors, it has been found that, in a pattern having a spot S positioned at a center and spots S positioned around the spot S as illustrated in FIG. 9 to 11, it is preferable to set the power of the spot S positioned at the center to be higher than a total value of the power of the plurality of spots S positioned around the spot S. More specifically, it has been found that the power of the spot S positioned at the center is preferably 50 [%] or higher and 80 [%] or lower with respect to the total value of the power of all the spots S including the center and the periphery. In this case, it has been found that it is preferable to set the center ratio higher as higher power is required to cut the workpiece W. Note that, in various patterns, the center of the spot S positioned at the center does not necessarily need to coincide with the center of gravity C of the plurality of spots S, and for example, the spot S positioned at the center may be positioned at a position surrounded or sandwiched by the plurality of surrounding spots S, such as being positioned in a polygon having the centers of the surrounding spots S as vertexes.

[Spot Pattern (5)]

FIG. 12 is a plan view illustrating another example of the pattern of the plurality of spots S different from those in FIGS. 5 and 8 to 11. FIG. 12 also illustrates a shape and arrangement at a moment when the front surface Wa is irradiated with the plurality of beams B of the laser light L and the plurality of spots S is formed.

FIG. 12 illustrates the simplest pattern. Also in this case, positions scanned in the scanning directions D1 and D7 are irradiated with the beams B twice at time intervals. Hence, it is possible to curb occurrence of an inconvenient event such as generation of unevenness in the metal foil 10 or local generation of lumps, and to form the higher-quality edge 10a. Note that the number of linearly aligned spots S may be three or more.

As described above, according to the present embodiment, the plurality of beams of the laser light L is arranged to form the spot groups G1 to G6 including the plurality of spots S separated in the relative scanning directions on the front surface Wa. As a result, it was possible to efficiently form the high-quality edge 10a in both the first portion where the active material layer 12 is not formed on both the front surface and the back surface of the base metal 11 and the second portion where the active material layer 12 is formed on at least one of the front surface and the back surface of the base metal 11. Therefore, as illustrated in FIGS. 4 or 7, even in a case where the scanning paths Pt1 and Pt2 are set to continuously and alternately pass through both the first portion and the second portion, it is possible to more easily and more quickly form the high-quality edge 10a under the same irradiation conditions, for example, without significantly changing the irradiation conditions of the laser light when passing through the first portion and when passing through the second portion. In addition, in the portion where the active material layer 12 was applied, it was possible to reduce the thermal effect on the active material layer 12 and to curb the deterioration of the active material layer 12 due to the laser cutting.

[Second Embodiment]

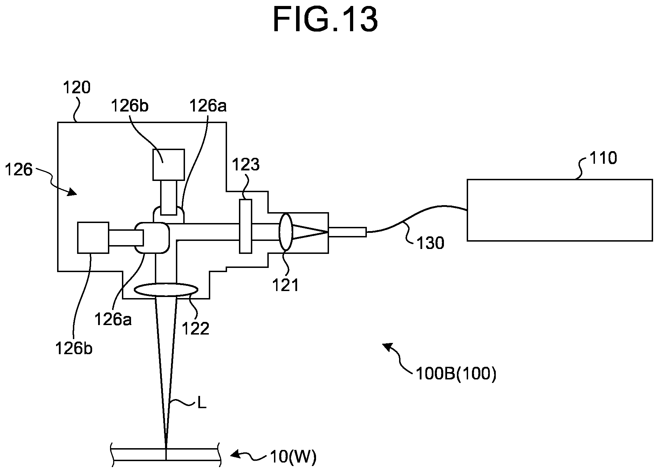

FIG. 13 is a schematic configuration diagram of a laser cutting apparatus 100B (100) of a second embodiment. In the present embodiment, the optical head 120 includes a galvanometer scanner 126 between the collimating lens 121 and the condenser lens 122. The galvanometer scanner 126 includes two mirrors 126a and an actuator 126b that changes postures of the mirrors 126a. An irradiation direction and an irradiation position of the laser light L are changed by changing the postures of the two mirrors 126a by the actuator 126b. That is, the laser cutting apparatus 100B does not move the optical head 120, but can move, that is, scan, an irradiation position with the beams B of the laser light L, that is, the positions of the spots S, on the front surface Wa. Also according to the present embodiment, the same operations and effects as those of the first embodiment can be obtained. However, the galvanometer scanner 126 may be provided in the optical head 120 of the laser cutting apparatus 100A of the first embodiment. That is, the scanning with the beams B (spots S) of the laser light L on the front surface Wa may be realized by a combination of at least one of the movement of the optical head 120 and the movement of the workpiece W and a change in the emission angle of the laser light L with respect to the optical head 120.

Although the embodiments of the present invention have been exemplified above, the above embodiments are merely examples, and are not intended to limit the scope of the invention. The above-described embodiments can be implemented in various other aspects, and various omissions, substitutions, combinations, and modifications can be made without departing from the gist of the invention. In addition, specifications (a structure, a type, a direction, a model, a size, a length, a width, a thickness, a height, a number, arrangement, a position, a material, and the like) of each configuration, shape, and the like can be appropriately modified and implemented.

For example, the number, arrangement, scanning direction (arrangement direction of spots), and the like of the spots (spot group) can be variously modified. In addition, the scanning path can be variously modified.

Industrial Applicability

The present invention can be used in a laser cutting method and a laser cutting apparatus.

Reference Signs List

10 METAL FOIL
10a EDGE
11 BASE METAL
12 ACTIVE MATERIAL LAYER
100, 100A, 100B LASER CUTTING APPARATUS
110 LASER DEVICE
120 OPTICAL HEAD
121 COLLIMATING LENS
122 CONDENSING LENS
123 DOE
123a DIFFRACTION GRATING
126 GALVANOMETER SCANNER
126a MIRROR
126b ACTUATOR
130 OPTICAL FIBER
140 MOVING MECHANISM
B BEAM
C CENTER OF GRAVITY
D1 to D11 SCANNING DIRECTION
d1 to d4 WIDTH
G1 to G6 SPOT GROUP
L LASER LIGHT
P1 to P6 ZONE
Pc COVERED PART (SECOND PORTION)
Pe EXPOSED PART (FIRST PORTION)
Pp PEAK POWER
Pt1, Pt2 SCANNING PATH
S, S1 to S5 SPOT
Tc PERIOD
Tp OSCILLATION TIME
W WORKPIECE
Wa FRONT SURFACE
X DIRECTION
Y DIRECTION
Z DIRECTION

**Claims**

1. A laser cutting method comprising:

   performing laser cutting on a metal foil by scanning, on a front surface of the metal foil with respect to the front surface, the front surface while irradiating the front surface with laser light, wherein
   the laser light includes a plurality of beams, and
   the plurality of beams are arranged to form a spot group including a plurality of spots separated in a relative scanning direction on the front surface.

2. The laser cutting method according to claim 1, wherein

   a power of an individual one of the beams forming the plurality of respective spots included in the spot group on the front surface is set to a magnitude with which scanning with the individual one beam at a predetermined speed in the scanning direction does not enable the metal foil to be cut, and
   a power of the plurality of beams forming the plurality of spots included in the spot group on the front surface is set to a magnitude with which scanning with the plurality of beams at the predetermined speed in the scanning direction enables the metal foil to be cut.

3. The laser cutting method according to claim 1 or 2, wherein

a scanning path of each of the beams on the front surface includes a plurality of zones in which scanning is performed in different scanning directions, and
the plurality of beams are arranged to form, as the spot group, a plurality of spot groups including a plurality of spots separated in scanning directions of the plurality of respective zones.

4. The laser cutting method according to claim 3, wherein the scanning path includes two zones in which scanning is performed in scanning directions orthogonal to each other.

5. The laser cutting method according to claim 3, wherein the scanning path includes three or more zones in which the scanning is performed in scanning directions intersecting each other.

6. The laser cutting method according to any one of claims 3 to 5, wherein the plurality of spot groups are arranged such that geometric centers of spots formed on the front surface substantially coincide with each other.

7. The laser cutting method according to any one of claims 1 to 6, wherein a distance from a geometric center of a plurality of spots formed on the front surface to a center of each of the spots is 30 $\mu$m or longer and 75 $\mu$m or shorter.

8. The laser cutting method according to any one of claims 1 to 7, wherein

the plurality of spots include a first spot and a plurality of second spots provided around the first spot, and
a ratio of a power of the first spot to a total power of the plurality of spots is 50% or higher and 80% or lower.

9. The laser cutting method according to any one of claims 1 to 8, wherein the plurality of beams are formed by a beam shaper.

10. The laser cutting method according to claim 9, wherein the beam shaper is a diffractive optical grating.

11. The laser cutting method according to any one of claims 1 to 10, wherein the metal foil includes a base metal and a covering layer covering at least one of a front surface and a back surface of the base metal.

12. The laser cutting method according to claim 11, wherein the metal foil includes the base metal and two covering layers covering the front surface and the back surface of the base metal.

13. The laser cutting method according to claim 11 or 12, wherein

the scanning path of each of the beams on the front surface includes a zone passing through a first portion in which both the front surface and the back surface of the base metal are not covered with the covering layer, and a zone passing through a second portion in which at least one of the front surface and the back surface of the base metal is covered with the covering layer, and
the first portion and the second portion are consecutively cut.

14. The laser cutting method according to claim 13, wherein irradiation conditions of the laser light are same in both the zone passing through the first portion and the zone passing through the second portion, of the scanning path.

15. The laser cutting method according to any one of claims 11 to 14, wherein the base metal is any one of an aluminum-based metal material, a copper-based metal material, and a nickel-based metal material.

16. The laser cutting method according to any one of claims 11 to 15, wherein the covering layer is any one of lithiated transition metal oxides NCA (LiNiCoAlO$_2$) or NCM (LiNiCoMnO$_2$), carbon black, a polymer binder, LiMn$_2$O$_4$, LiFePO$_4$, LiNiO$_2$, LiMnO$_2$, LiCoO$_2$, and lithium sulfur (Li$_2$S).

17. A laser cutting apparatus comprising:

a laser oscillator; and

an optical head configured to emit laser light output from the laser oscillator, wherein
laser cutting is performed on a metal foil by scanning, on a front surface of the metal foil with respect to the front surface, the front surface while irradiating the front surface with the laser light,
the laser light includes a plurality of beams, and
the plurality of beams are arranged to form a spot group including a plurality of spots separated in a relative scanning direction on the front surface.

18. The laser cutting apparatus according to claim 17, comprising a beam shaper configured to form the plurality of beams.

19. The laser cutting apparatus according to claim 18, wherein the beam shaper is a diffractive optical grating.

# FIG.1

# FIG.2

# FIG.3

10(W)

12

Wa

Wa    11

12

12

Z
X⊙ → Y

# FIG.4

10(W)

(10a)
Pt1    P2    P3    P4

11(Wa,Pe)

P4

12(Wa,Pc)

P1    P1

D2
Z⊙ → D1,D3
D4

# FIG.5

# FIG.6

# FIG.7

# FIG.8

# FIG.9

# FIG.10

# FIG.11

Wa(W)

C

S2(S,B)

S1
(S,B)

⊙
Z

# FIG.12

Wa(W)

S(B)

D7 ←--------------------------------→ D1

⊙
Z

# FIG.13

| INTERNATIONAL SEARCH REPORT | International application No. |
|---|---|
| | **PCT/JP2023/012611** |

**A. CLASSIFICATION OF SUBJECT MATTER**

*B23K 26/064*(2014.01)i; *B23K 26/067*(2006.01)i; *B23K 26/082*(2014.01)i; *B23K 26/38*(2014.01)i
FI:   B23K26/38 A; B23K26/064 Z; B23K26/067; B23K26/082

According to International Patent Classification (IPC) or to both national classification and IPC

**B. FIELDS SEARCHED**

Minimum documentation searched (classification system followed by classification symbols)

B23K26/064; B23K26/067; B23K26/082; B23K26/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/004827 A1 (THE FURUKAWA ELECTRIC CO., LTD.) 06 January 2022 (2022-01-06)<br>  paragraphs [0088]-[0098], fig. 12-14 | 1, 3-6, 9-10, 17-19 |
| X | JP 2015-188908 A (TOYOTA INDUSTRIES CORP.) 02 November 2015 (2015-11-02)<br>  paragraphs [0021], [0030], [0053]-[0060], [0073], fig. 1, 5 | 1-5, 7-19 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 April 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2023/012611**

| Patent document cited in search report | | | Publication date (day/month/year) | Patent family member(s) | Publication date (day/month/year) |
|---|---|---|---|---|---|
| WO | 2022/004827 | A1 | 06 January 2022 | (Family: none) | |
| JP | 2015-188908 | A | 02 November 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PATWA, RAHUL et al.** High speed laser cutting of electrodes for advanced batteries. *International Congress on Applications of Lasers & Electro Optics*, 2010